# EUROPEAN PATENT APPLICATION

(11) **EP 3 300 349 A1**
(43) Date of publication of application: **28.03.2018**
(21) Application number: 16799086.0
(22) Date of filing: 15.03.2016
(51) Int. Cl.: H04N 5/232, H04N 5/225

(54) **PICTURE PROCESSING METHOD, SENDING METHOD, PROCESSING APPARATUS AND SENDING APPARATUS**

(30) Priority: 22.05.2015 CN 201510267069
(71) Applicant: ZTE Corporation, Shenzhen, Guangdong 518057 (CN)
(72) Inventor: FANG, Wen, Shenzhen Guangdong 518057 (CN)
(74) Representative: Studio Torta S.p.A.
(86) International application number: PCT/CN2016/076417
(87) International publication number: WO 2016/188197

(57) **Abstract**

The present disclosure provides a picture processing method, sending method, processing apparatus and sending apparatus. The picture processing method comprises: a terminal extracts a pre-determined image displayed on a first picture in the terminal; the terminal acquires a second picture; and the terminal combines the pre-determined image and the second picture into one picture. The present invention solves the problem of impossibility in random replacement of a picture background in the related art, thereby achieving the effect of randomly replacing the picture background.

## Description

### TECHNICAL FIELD

The present disclosure relates to the field of communications, and more particularly, to a picture processing method, a sending method, a processing apparatus and a sending apparatus.

### BACKGROUND

A camera on a mobile terminal is a frequently used function. With the constant development of the use experience of the terminal, various new developed functions of the camera also become more and more, and particularly, considerable accumulation and application in the aspect of portrait and background recognition.

Face recognition and smiling face recognition functions based on image processing technologies can effectively separate faces from background images and can further separate the photographed from the background images according to graphics morphology. According to another aspect, binocular stereo vision photographing based on the mobile terminal gradually is commercialized. Due to differences between close views and distant views in dual camera, photographing based on the dual camera can conveniently separate figures in the close views from the distant views.

As can be seen, in the related art, single-camera photographing or dual-camera photographing can effectively implement separation of figures from backgrounds.

With social and entertainment development of the mobile terminal, a self-photographing function becomes one of the functions used by more and more young users. Sometimes, users using the self-photographing function expect to combine their images with other different backgrounds so as to achieve a particular entertainment effect. Meanwhile, some users expect to upload some images or pictures photographed by themselves to serve as self-photographing backgrounds of others. It can be predicted that there may be demands for social communication between the two kinds of users. However, in the related art there is no method for changing a picture background at random.

Aiming at the problem of impossibility in random replacement of a picture background in the related art, no effective solution has been proposed yet at present.

### SUMMARY

The present disclosure provides a picture processing method, a sending method, a processing apparatus and a sending apparatus to at least solve the problem of impossibility in random replacement of a picture background in the related art.

According to an aspect of the present disclosure, there is provided a picture processing method, which includes: extracting, by a terminal, a predetermined image displayed on a first picture in the terminal; acquiring, by the terminal, a second picture; and combining, by the terminal, the predetermined image and the second picture into one picture.

Alternatively, acquiring, by the terminal, the second picture includes: sending, by the terminal, a request message to a first server, wherein the request message is used for requesting to acquire a picture stored in the first server; receiving, by the terminal, one or more pictures sent from the first server, wherein the one or more pictures are pictures selected by the first server according to a predetermined strategy; and acquiring the second picture by the terminal from the one or more pictures.

Alternatively, after sending, by the terminal, the request message to the first server, the method further includes: receiving, by the terminal, information on a provider of the one or more pictures sent from the first server; and communicating, by the terminal, with the provider of the one or more pictures according to the information on the provider of the one or more pictures.

Alternatively, sending, by the terminal, the request message to the first server includes at least one of: sending, by the terminal, the request message to the first server after determining that a velocity of movement and/or an acceleration of the terminal exceeds a predetermined threshold; and sending, by the terminal, the request message to the first server after receiving a touch signal satisfying a predetermined slide path.

Alternatively, the predetermined strategy includes at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

Alternatively, the information on the provider of the one or more pictures includes contact information on the provider of the one or more pictures, and the information on the provider of the one or more pictures includes at least one of: personal information on the provider of the one or more pictures, photographing time information on the one or more pictures, and photographing position information on the one or more pictures.

Alternatively, communicating, by the terminal, with the provider of the one or more pictures according to the information on the provider of the one or more pictures includes: displaying, by the terminal, an operation interface configured to establish a social connection; sending, by the terminal, a communication request message, to a second server configured to establish a communication connection after receiving a signal for clicking the operation interface, wherein the communication request message is used for requesting to establish a communication connection between the terminal and the provider of the one or more pictures; and communicating by the terminal with the provider of the one or more pictures upon establishing the communication connection.

Alternatively, sending, by the terminal, a communication request message, to a second server configured to establish a communication connection includes: sending, by the terminal via the first server, the communication request message, to the second server.

According to another aspect of the present disclosure, there is provided a picture sending method, which includes: receiving, by a first server, a request message sent from a terminal, wherein the request message is used for acquiring a picture stored in the first server, and the picture stored in the first server is used for combining with a predetermined image displayed on a first picture in the terminal; selecting, by the first server, one or more pictures from stored pictures; and sending, by the first server, the selected pictures to the terminal. Alternatively, selecting, by the first server, one or more pictures from stored pictures includes: selecting, by the first server, one or more pictures from the stored pictures according to the predetermined strategy, wherein the predetermined strategy includes at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server. Alternatively, after selecting, by the first server, one or more pictures from stored pictures, the method further includes: sending, by the first server, information on a provider of the selected one or more pictures to the terminal.

Alternatively, the information on the provider of the one or more pictures includes contact information on the provider of the one or more pictures, wherein the information on the provider of the one or more pictures includes at least one of: personal information on the provider of the one or more pictures, photographing time information on the one or more pictures, and photographing position information on the one or more pictures.

Alternatively, after sending, by the first server, information on a provider of the selected one or more pictures to the terminal, the method further includes: receiving, by the first server, a communication request message sent from the terminal, wherein the communication request message is used for requesting to establish a communication connection between the terminal and a provider corresponding to the information on a provider of the one or more pictures; and sending, by the first server, the communication request message to a second server configured to establish a communication connection.

According to another aspect of the present disclosure, there is provided a picture processing apparatus, which is used in a terminal and includes: an extracting module, configured to extract a predetermined image displayed on a first picture in the terminal; an acquiring module, configured to acquire a second picture; and a combining module, configured to combine the predetermined image and the second picture into one picture.

Alternatively, the acquiring module includes: a sending unit, configured to send a request message to a first server, wherein the request message is used for requesting to acquire a picture stored in the first server; a first receiving unit, configured to receive one or more pictures sent from the first server, wherein the one or more pictures are pictures selected by the first server according to a predetermined strategy; and an acquiring unit, configured to acquire the second picture from the one or more pictures.

Alternatively, the apparatus further includes: a second receiving unit, configured to receive information on a provider of the one or more pictures sent from the first server; and a communication unit, configured to communicate with the provider of the one or more pictures according to the information on the provider of the one or more pictures. Alternatively, the sending unit is configured to perform at least one of: sending the request message to the first server after determining that a velocity of movement and/or an acceleration of the terminal exceed a predetermined threshold; and sending the request message to the first server after receiving a touch signal satisfying a predetermined slide path. Alternatively, the predetermined strategy includes at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

Alternatively, the information on the provider of the one or more pictures includes contact information on the provider of the one or more pictures, and the information on the provider of the one or more pictures includes at least one of: personal information on the provider of the one or more pictures, photographing time information on the one or more pictures, and photographing position information on the one or more pictures.

Alternatively, the communication unit includes: a display subunit, configured to display an operation interface for establishing a social connection; a sending subunit, configured to send a communication request message to a second server for establishing a communication connection after receiving a signal for clicking the operation interface, wherein the communication request message is used for requesting to establish a communication connection between the communication unit and the provider of the one or more pictures; and a communication subunit, configured to communicate with the provider of the one or more pictures upon establishing the communication connection.

Alternatively, the sending subunit is configured to: send the communication request message to the second server via the first server.

According to another aspect of the present disclosure, there is provided a picture sending apparatus, which is used in a first server and includes: a first receiving module, configured to receive a request message sent from a terminal, wherein the request message is used for acquiring a picture stored in the first server, and the picture stored in the first server is used for combining with a predetermined image displayed on a first picture in the terminal; a selecting module, configured to select one or more pictures from stored pictures; and a first sending module, configured to send the selected pictures to the terminal.

Alternatively, the selecting module is configured to: select one or more pictures from the stored pictures according to the predetermined strategy, wherein the predetermined strategy includes at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

Alternatively, the apparatus further includes: a second sending module, configured to send information on a provider of the selected one or more pictures to the terminal.

Alternatively, the information on the provider of the one or more pictures includes contact information on the provider of the one or more pictures, wherein the information on the provider of the one or more pictures includes at least one of: personal information on the provider of the one or more pictures, photographing time information on the one or more pictures, and photographing position information on the one or more pictures.

Alternatively, the apparatus further includes: a second receiving module, configured to receive a communication request message sent from the terminal, wherein the communication request message is used for requesting to establish a communication connection between the terminal and a provider corresponding to the information on a provider of the one or more pictures; and a third sending module, configured to send the communication request message to a second server for establishing a communication connection.

According to the present disclosure, a terminal is employed to extract a predetermined image displayed on a first picture in the terminal; the terminal acquires a second picture; and the terminal combines the predetermined image and the second picture into one picture. In this way, the problem of impossibility in random replacement of a picture background in the related art is solved, thereby achieving the effect of randomly replacing the picture background.

### BRIEF DESCRIPTION OF THE DRAWINGS

The accompanying drawings described herein are intended for providing further understanding of the present disclosure, and constituting a part of the present disclosure. The exemplary embodiments of the present disclosure and description thereof are intended for explaining the present disclosure, but not for constituting an improper limitation on the present disclosure. In the drawings:
FIG. 1 is a flowchart of a picture processing method according to an embodiment of the present disclosure;
FIG. 2 is a flowchart of a picture sending method according to an embodiment of the present disclosure;
FIG. 3 is a structural block diagram of a picture processing apparatus according to an embodiment of the present disclosure;
FIG. 4 is a structural block diagram of an acquiring module 34 in the picture processing apparatus according to an embodiment of the present disclosure;
FIG. 5 is a preferable structural block diagram of the acquiring module 34 in the picture processing apparatus according to an embodiment of the present disclosure;
FIG. 6 is a structural block diagram of a communication unit 54 in the picture processing apparatus according to an embodiment of the present disclosure;
FIG. 7 is a structural block diagram of a picture sending apparatus according to an embodiment of the present disclosure;
FIG. 8 is preferable structural block diagram I of the picture sending apparatus according to an embodiment of the present disclosure;
FIG. 9 is preferable structural block diagram II of the picture sending apparatus according to an embodiment of the present disclosure;
FIG. 10 is a structural block diagram of a mobile terminal according to an embodiment of the present disclosure;
FIG. 11 is a schematic diagram of interaction between a terminal and a network side according to an embodiment of the present disclosure;
FIG. 12 is a schematic diagram of a related strategy for pushing a background picture by a server according to an embodiment of the present disclosure; and
FIG. 13 is a schematic diagram of a related interaction at a terminal according to an embodiment of the present disclosure.

### DETAILED DESCRIPTION

The present disclosure will be described below in detail with reference to the accompanying drawings and in combination with the embodiments. It should also be noted that the embodiments in the present disclosure and the features in the embodiments may be combined with each other on a non-conflict basis.

It should be explained that in the specification, the claims and the foregoing accompanying drawings of the present disclosure, a term (such as a first or a second......) is intended to separate between similar objects but is not intended to describe a specific sequence or precedence order.

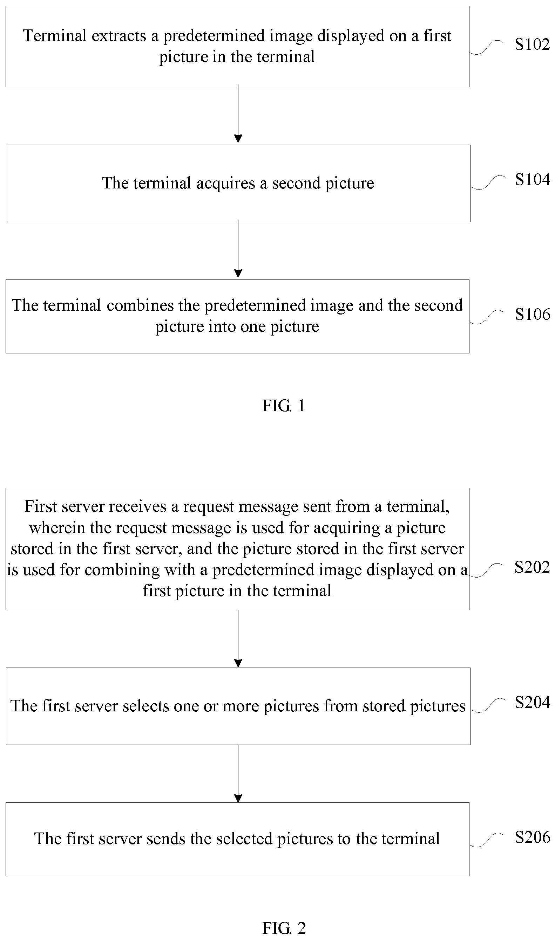

In this embodiment there is provided a picture processing method. FIG. 1 is a flowchart of a picture processing method according to an embodiment of the present disclosure. As shown in FIG. 1, the flow includes following steps.

In Step S102, a terminal extracts a predetermined image displayed on a first picture in the terminal.

In Step S104, the terminal acquires a second picture.

In Step S106, the terminal combines the predetermined image and the second picture into one picture.

The predetermined image displayed on the first picture may be a portrait image in a self-photographing picture of the user or a family member image in a photographed family picture. Of course, the predetermined image also may be other images such as an image of a pet. The objective of changing the background image may be implemented by combining the predetermined image with the second picture. In addition, after randomly acquiring the second picture, the terminal may further acquire the second picture if the acquired picture is unsatisfactory. That is, the step of acquiring the second picture by the terminal may be a cyclic step until a satisfactory picture is acquired. The two steps of extracting a predetermined image displayed on a first picture and acquiring a second picture may have no order of priority. That is, either of the two steps may be first performed, or the two steps may be simultaneously performed. By the above steps, the problem of impossibility in random replacement of a picture background in the related art is solved, thereby achieving the effect of randomly replacing the picture background.

The terminal may acquire the second picture in a variety of ways. For example, a picture stored in the terminal may be acquired, pictures in other terminals are acquired by way of Bluetooth transmission, or of course the picture may also be acquired by means of a server. In the following reference is made by taking an example in which the second picture is acquired by means of the server. In an alternative embodiment, acquiring, by the terminal, the second picture includes: sending, by the terminal, a request message to a first server, wherein the request message is used for requesting to acquire a picture stored in the first server; receiving, by the terminal, one or more pictures sent from the first server, wherein the one or more pictures are pictures selected by the first server according to a predetermined strategy; and acquiring the second picture by the terminal from the one or more pictures. The second picture is acquired using the above way, some pictures may be prestored in the first server, or the picture is acquired after the first server receives the request message from the terminal. Reference is made in combination with one specific embodiment as below: after photographers, such as scenery photographers, of other terminals photograph pictures, these pictures may be uploaded, as background pictures, to the first server. The first server receives background pictures uploaded from mobile terminals of different scenery photographers, and stores these background pictures according to particular strategies. The mobile terminal (namely, the above terminal needing to acquire the second picture) of a portrait photographer finishes photographing, portrait information in the picture is extracted, a background picture request is initiated to the first server according to user operation. The first server sends the photographed scenery pictures to the mobile terminal of the portrait photographer according to particular strategies. After the mobile terminal receives the photographed scenery pictures sent from the first server, synthesis of the portrait and the received scenery pictures may be completed in this terminal.

In an alternative embodiment, after sending, by the terminal, the request message to the first server, the method further includes: receiving, by the terminal, information on a provider of the one or more pictures sent from the first server; and communicating, by the terminal, with the provider of the one or more pictures according to the information on the provider of the one or more pictures. That is, when the first server provides a picture for the terminal, the information on the provider of the picture also may be sent to the terminal. The first server may send the information on the provider when sending the picture to the terminal, or send the information on the provider before sending the picture, or send the information on the provider after sending the picture. In this way, the objective of communicating between the user of the terminal and the provider of the picture is implemented.

In an alternative embodiment, sending, by the terminal, the request message to the first server includes at least one of: sending, by the terminal, the request message to the first server after determining that a velocity of movement and/or an acceleration exceeds a predetermined threshold; and sending, by the terminal, the request message to the first server after receiving a touch signal satisfying a predetermined slide path. That is, the user may send the request message to the server by shaking the terminal (for example, by way of shaking), or may send the request message to the server by way of a predetermined slide path on the terminal. When the user of the terminal is unsatisfied with the acquired picture, the user of the terminal may initiate again, at any moment, a request for acquiring a picture to the server using the above operation mode. When a request for acquiring a picture is initiated by way of shaking the terminal, the request is initiated by triggering a gyroscope or gravity sensor in the terminal. In an alternative embodiment, the predetermined strategy may include at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server. According to the regional information selected by the terminal, the terminal may be allowed to acquire a picture provided by a picture provider of which region (for example, Beijing, China) according to needs specified by the user, or acquire a picture photographed in a predetermined region. The user personal information recorded in the terminal may include age, education background, and hobbies and interests of the user. The personal information of the picture provider also may include age, education background, and hobbies and interests of the provider, so that when the picture is provided for the terminal, a picture provided by a provider who is equivalent to the terminal user in age or education background may be selected. The preference information of a picture stored in the first server is a degree of preference of the picture. For example, users of different terminals may mark a certain favorite picture by praising. The preference information of the picture described herein may be the number of times of praise or the number of times of use by the users of different terminals. It is to be noted that when the picture provider uploads the picture to the first server, the picture provider also may upload personal information to the first server.

In an alternative embodiment, the information on the provider of the one or more pictures may include contact information on the provider of the one or more pictures, and the information on the provider of the one or more pictures further includes at least one of: personal information on the provider of the one or more pictures, photographing time information on the one or more pictures, and photographing position information on the one or more pictures. The personal information may include at least one of age, education background, hobbies and interests, etc.

In an alternative embodiment, communicating, by the terminal, with the provider of the one or more pictures according to the information on the provider of the one or more pictures includes: displaying, by the terminal, an operation interface configured to establish a social connection; sending, by the terminal, a communication request message, to a second server configured to establish a communication connection after receiving a signal for clicking the operation interface, wherein the communication request message is used for requesting to establish a communication connection between the terminal and the provider of the one or more pictures; and communicating by the terminal with the provider of the one or more pictures upon establishing the communication connection. The first server and the second server may be the same server or may be separate servers. When communicating with the picture provider, it may be selected to merely communicate with the provider of the second picture. Of course, it also may be selected to communicate with the providers of other unselected pictures. In an example, after the user of the terminal selects a certain picture, a terminal interface may provide an operation interface so that the user of the terminal can leave a message for the provider of the corresponding picture and establish a social connection.

In an alternative embodiment, the step of establishing a social connection may be as below: after the user of the terminal selects a picture interface and synthesize a picture, the terminal interface may provide an operation interface for establishing a social connection, and the terminal may detect operation on the interface. After the terminal detects the operation of the user on the operation interface for establishing a social connection, the picture provider is searched out by means of personal social information of the picture provider acquired in advance and an instant communication is established. There are two methods for establishing the instant communication: 1) the terminal makes, to the first server, a request for establishing a communication connection (for example, instant communication); after receiving the request, the first server forwards the request to an externally independent social communication management module (or a standalone server, equivalent to the above second server); and the social communication management module establishes the instant communication between two parties according to social information (such as an instant communication number) on the two parties. 2) The terminal directly extracts the social information on the picture provider, and sends an instant communication establishing request to a social communication management server (equivalent to the above second server) different from the first server. After the social communication management server receives the request, the instant communication number between two parties is established according to social information (such as an instant communication number) on the two parties. As can be known from the above embodiment, when the first server and the second server are not the same server, the terminal may utilize the first server to indirectly initiate a communication connection request for the second server configured to establish communication connection. FIG. 2 is a flowchart of a picture sending method according to an embodiment of the present disclosure. As shown in FIG. 2, the method includes following steps.

In Step S202, a first server receives a request message sent from a terminal, wherein the request message is used for acquiring a picture stored in the first server, and the picture stored in the first server is used for combining with a predetermined image displayed on a first picture in the terminal.

In Step S204, the first server selects one or more pictures from stored pictures.

In Step S206, the first server sends the selected pictures to the terminal.

As can be known from the above steps, when the terminal needs to substitute a part of images (for example, background images) in the pictures, a request for acquiring a picture may be sent, at any moment, to the first server. The first server may send the selected pictures to the terminal according to the request of the terminal so that the terminal combines these pictures. By the above steps, the problem of impossibility in random replacement of a picture background in the related art is solved, thereby achieving the effect of randomly replacing the picture background.

In an alternative embodiment, selecting, by the first server, one or more pictures from the stored pictures includes: selecting, by the first server, one or more pictures from the stored pictures according to a predetermined strategy, wherein the predetermined strategy includes at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server. According to the regional information selected by the terminal, the terminal may be allowed to acquire a picture provided by a picture provider of which region (for example, Beijing, China) according to needs specified by the user, or acquire a picture photographed in a predetermined region. The user personal information recorded in the terminal may include age, education background, and hobbies and interests of the user. The personal information of the picture provider also may include age, education background, and hobbies and interests of the provider, so that when the picture is provided for the terminal, a picture provided by a provider who is equivalent to the terminal user in age or education background may be selected. The preference information of a picture stored in the first server is a degree of preference of the picture. For example, users of different terminals may mark a certain favorite picture by praising. The preference information of the picture described herein may be the number of times of praise or the number of times of use by the users of different terminals. It is to be noted that when the picture provider uploads the picture to the first server, the picture provider also may upload personal information to the first server. After receiving a picture uploaded by the picture provider, the first server also may store the picture according to a predetermined strategy, and when receiving the picture uploaded by the picture provider, the first server also may receive relevant information of the picture provider reported by the picture provider, such as age, education background, hobbies and interests, or relevant information of the picture, for example, photographing time and photographing position of the picture.

In an alternative embodiment, after selecting, by the first server, one or more pictures from stored pictures, the method further includes: sending, by the first server, information on a provider of the selected one or more pictures to the terminal. When sending the information on the picture provider, the first server may separately send the information on the picture provider to the terminal. Sending the information on the picture provider and sending the pictures may have no precedence order. That is, it is permissible to first send the information on the picture provider or the picture, or to send the picture and the information on the picture provider simultaneously. When sending the information on the picture provider, the first server also may record the information on the picture provider into the picture, so that the information on the picture provider may be send together with the picture simultaneously without extra sending the information on the picture provider, thereby relieving stress of the server.

In an alternative embodiment, the information on the provider of the one or more pictures includes contact information on the provider of the one or more pictures, wherein the information on the provider of the one or more pictures further includes at least one of: personal information on the provider of the one or more pictures, photographing time information on the one or more pictures, and photographing position information on the one or more pictures.

In an alternative embodiment, after sending, by the first server, information on a provider of the selected one or more pictures to the terminal, the method further includes: receiving, by the first server, a communication request message sent from the terminal, wherein the communication request message is used for requesting to establish a communication connection between the terminal and a provider corresponding to the information on a provider of the one or more pictures; and sending, by the first server, the communication request message to a second server configured to establish a communication connection. Of course, the first server also may have the function of establishing a communication connection. When the first server has the function of establishing a communication connection, the first server may directly establish a communication connection between the terminal and the picture provider according to the communication request message.

It can be known from the description of the foregoing implementation manners, a person skilled in the art may clearly know that the method of the foregoing embodiments may be implemented by means of software and necessary general hardware platform or of course by means of hardware, but in most cases the former is the better implementation manner. Based on such an understanding, the technical solution of the present disclosure in essence or that part of contribution to the prior art may be embodied in the form of software products, which may be stored in storage media (such as ROM/RAM, diskettes or optical disks), including some instructions so that it is possible to execute the method as recited in the embodiments of the present disclosure by a terminal device (a mobile phone, a computer, a server, or a network device, etc.).

In this embodiment there is further provided a picture processing apparatus, which is configured to implement the above embodiments and preferred implementations. The picture processing apparatus has been described and thus is not repeated any more. As used below, the term "module" may implement software of predetermined functions and/or a combination of software and hardware. The apparatus described in the following embodiments is preferably implemented by software. However, implementation by combination of software and hardware also may be conceived.

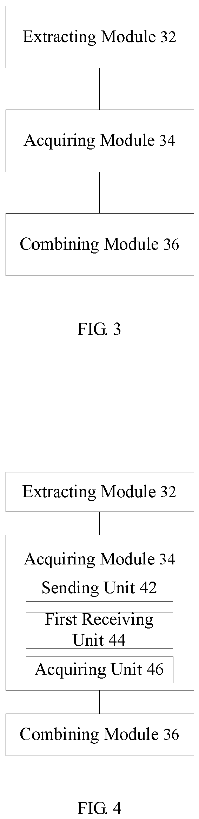

FIG. 3 is a structural block diagram of a picture processing apparatus according to an embodiment of the present disclosure. The apparatus may be used in a terminal. As shown in FIG. 3, the apparatus includes an extracting module 32, an acquiring module 34 and a combining module 36. The apparatus is described in the following.

The extracting module 32 is configured to extract a predetermined image displayed on a first picture in the terminal. The acquiring module 34 is connected to the extracting module 32 and is configured to acquire a second picture. The combining module 36 is connected to the acquiring module 34 and is configured to combine the predetermined image and the second picture into one picture.

FIG. 4 is a structural block diagram of an acquiring module 34 in the picture processing apparatus according to an embodiment of the present disclosure. As shown in FIG. 4, the acquiring module 34 includes a sending unit 42, a first receiving unit 44 and an acquiring unit 46. The acquiring module 34 is described in the following.

The sending unit 42 is configured to send a request message to a first server, wherein the request message is used for requesting to acquire a picture stored in the first server. The first receiving unit 44 is connected to the sending unit 42 and is configured to receive one or more pictures sent from the first server, wherein the one or more pictures are pictures selected by the first server according to a predetermined strategy. The acquiring unit 46 is connected to the first receiving unit 44 and is configured to acquire the second picture from the one or more pictures.

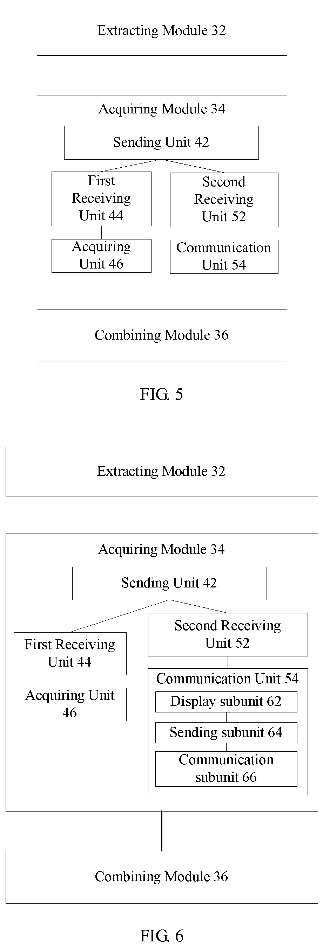

FIG. 5 is a preferable structural block diagram of the acquiring module 34 in the picture processing apparatus according to an embodiment of the present disclosure. As shown in FIG. 5, in addition to the units as shown in FIG. 4, the acquiring module 34 further includes a second receiving unit 52 and a communication unit 54. The acquiring module 34 is described in the following.

The second receiving unit 52 is connected to the sending unit 42 and is configured to receive information on a provider of the one or more pictures sent from the first server. The communication unit 54 is connected to the second receiving unit 52 and is configured to communicate with the provider of the one or more pictures according to the information on the provider of the one or more pictures.

In an alternative embodiment, the sending unit 42 is configured to perform at least one of: sending the request message to the first server after determining that a velocity of movement and/or an acceleration of the terminal exceed a predetermined threshold; and sending the request message to the first server after receiving a touch signal satisfying a predetermined slide path.

In an alternative embodiment, the predetermined strategy may include at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

In an alternative embodiment, the information on the provider of the one or more pictures includes contact information on the provider of the one or more pictures, and the information on the provider of the one or more pictures may further include at least one of: personal information on the provider of the one or more pictures, photographing time information on the one or more pictures, and photographing position information on the one or more pictures.

FIG. 6 is a structural block diagram of a communication unit 54 in the picture processing apparatus according to an embodiment of the present disclosure. As shown in FIG. 6, the communication unit 54 includes a display subunit 62, a sending subunit 64 and a communication subunit 66. The communication unit 54 is described in the following.

The display subunit 62 is configured to display an operation interface for establishing a social connection. The sending subunit 64 is connected to the display subunit 62 and is configured to send a communication request message to a second server for establishing a communication connection after receiving a signal for clicking the operation interface, wherein the communication request message is used for requesting to establish a communication connection between the communication unit and the provider of the one or more pictures. The communication subunit 66 is connected to the sending subunit 64 and is configured to communicate with the provider of the one or more pictures upon establishing the communication connection.

In an alternative embodiment, the sending subunit 64 is configured to send the communication request message to the second server via the first server.

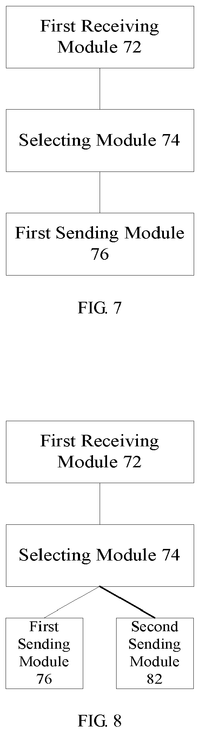

FIG. 7 is a structural block diagram of a picture sending apparatus according to an embodiment of the present disclosure. The apparatus may be used in a first server. As shown in FIG. 7, the apparatus includes a first receiving module 72, a selecting module 74 and a first sending module 76. The apparatus is described in the following.

The first receiving module 72 is configured to receive a request message sent from a terminal, wherein the request message is used for acquiring a picture stored in the first server, and the picture stored in the first server is used for combining with a predetermined image displayed on a first picture in the terminal. The selecting module 74 is connected to the first receiving module 72 and is configured to select one or more pictures from stored pictures. The first sending module 76 is connected to the selecting module 74 and is configured to send the selected pictures to the terminal.

In an alternative embodiment, the selecting module 74 is configured to select one or more pictures from the stored pictures according to the predetermined strategy. The predetermined strategy includes at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

FIG. 8 is preferable structural block diagram I of the picture sending apparatus according to an embodiment of the present disclosure. As shown in FIG. 8, in addition to all the modules as shown in FIG. 7, the apparatus further includes a second sending module 82. The apparatus is described in the following.

The second sending module 82 is connected to the selecting module 74 and is configured to send information on a provider of the selected one or more pictures to the terminal.

In an alternative embodiment, the information on the provider of the one or more pictures includes contact information on the provider of the one or more pictures. The information on the provider of the one or more pictures further include at least one of: personal information on the provider of the one or more pictures, photographing time information on the one or more pictures, and photographing position information on the one or more pictures.

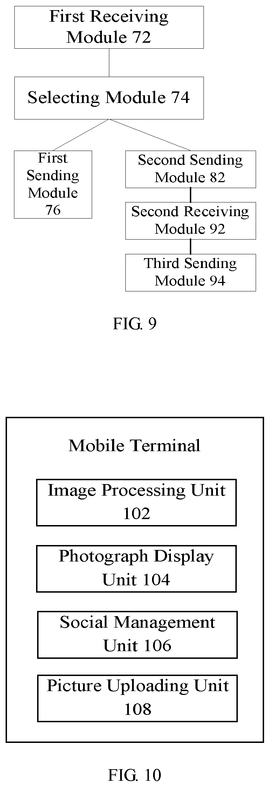

FIG. 9 is preferable structural block diagram II of the picture sending apparatus according to an embodiment of the present disclosure. As shown in FIG. 9, in addition to all the modules as shown in FIG. 8, the apparatus further includes a second receiving module 92 and a third sending module 94. The apparatus is described in the following.

The second receiving module 92 is connected to the second sending module 82 and is configured to receive a communication request message sent from the terminal, wherein the communication request message is used for requesting to establish a communication connection between the terminal and a provider corresponding to the information on a provider of the one or more pictures. The third sending module 94 is connected to the second receiving module 92 and is configured to send the communication request message to a second server for establishing a communication connection.

FIG. 10 is a structural block diagram of a mobile terminal according to an embodiment of the present disclosure. As shown in FIG. 10, the mobile terminal includes an image processing unit 102 (equivalent to the extracting module 32), a photograph display unit 104, a social management unit 106 (equivalent to the communication unit 54), and a picture uploading unit 108. These units are described in the following.

The image processing unit 102 is configured to process a picture (the first picture in the terminal) of a portrait photographer, extract portrait information in the picture, and synthesize the portrait information and a background picture photographed by a received scenery photographer (the provider of a picture).

The photograph display unit 104 is configured to display the portrait information photographed by a user and the received background information.

The social management unit 106 is configured to complete, according to operation of the user, a social request sent by the portrait photographer to a server specific to a particular scenery photographer, and transmit a social content.

The picture uploading unit 108 is configured to upload a background picture photographed by the user (serving as the scenery photographer) to the server.

In the following, the present disclosure is described by taking an example in which a background image of a picture in the terminal is changed by way of "shaking".

At present, application of WeChat™ becomes widely used. In the WeChat™ application, a user may get to corresponding music or other users by shaking. After the user takes a picture, it is possible for the user to get to background pictures uploaded by other users by shaking to replace the original photographing background so as to synthesize a new picture. In the following, reference is made on how to photograph pictures using cameras, to implement the change of a picture background by the function of shaking, and even further to implement an open social function between photographers.

The embodiment of the present disclosure is described mainly aiming at how to solve the problem that at present users cannot randomly change backgrounds during photographing and further providing a method for synthesizing pictures between the users who photograph pictures and scenery photographers so as to generate social communication.

In the embodiment of the present disclosure, the following method is proposed (for ease of differentiating descriptions, in the present disclosure, users providing scenery background pictures are referred to as scenery photographers (equivalent to the above picture providers) hereinafter, and users providing portrait pictures are referred to as portrait photographers (equivalent to the above users of the terminal needing to acquire the second picture)).

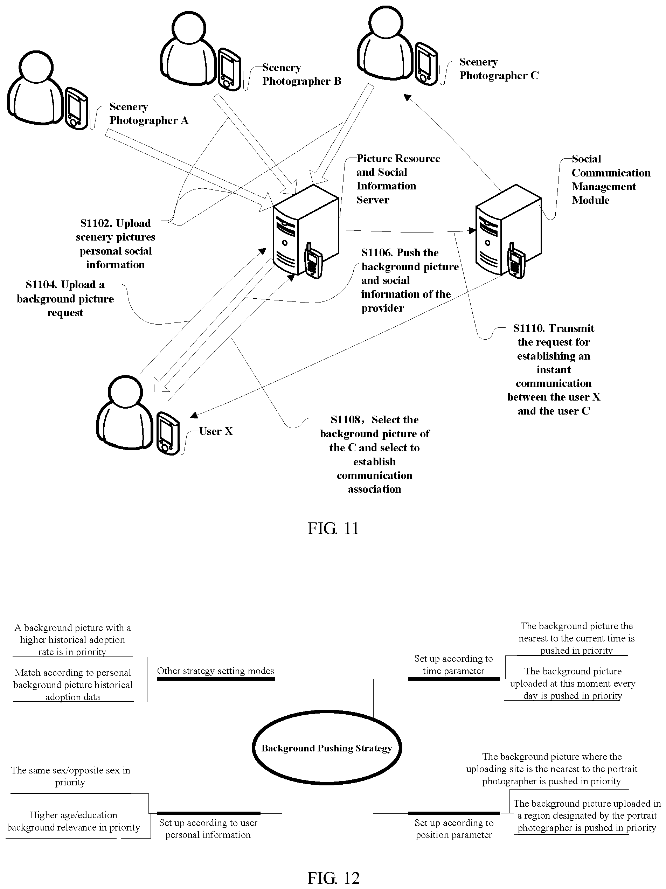

FIG. 11 is a schematic diagram of interaction between a terminal and a network side according to an embodiment of the present disclosure. Key steps are as below:
In Step S1102, scenery photographers A, B and C respectively upload photographed scenery pictures, as the background pictures, to a picture resource and social information server, and meanwhile associate optional social information with the pictures and upload the same.

In Step S1104, when the portrait photographer X photographs and extracts the portrait, the demand of acquiring the background picture is sent to the server.

In Step S1106, after the server receives the request of the photographer X, the background picture is pushed from the server to the photographer X according to a particular strategy. Processes of Steps S1104 and S1106 may be repeated until the portrait photographer X selects a proper background.

In Step S1108, after the photographer X selects the proper background (supposing the provider of this background is C, and the provider C uploads personal social information together with the background picture). After the extracted portrait and the background provided by the C are synthesized on this machine, the social information of the C is clicked on the mobile terminal and an instant communication association is requested to be established.

In Step S1110, after the picture resource and social information server receives the request from the user X, the request for establishing an instant communication between the user X and the user C is forwarded to the social communication management module at the server. The social communication management module is configured to establish the instant communication between the user X and the user C. (Additionally, an acceptance judgment, such as a user authentication, of the user C may be added before establishing the instant communication).

When establishing the instant communication, a point to point (p2p) technology may be employed to traverse the firewall so as to transmit audio and video data. A universal plug and play (UPNP) protocol is employed to automatically search for a UPNP device in the network so as to actively open a port mapping. Herein, the process of establishing the instant communication after having account numbers of two sides and the process of intercommunication are not unnecessarily described.

FIG. 12 is a schematic diagram of a related strategy for pushing a background picture by a server according to an embodiment of the present disclosure. As shown in FIG. 12:
The server (equivalent to the above first server) may push a background picture strategy according to a time parameter for uploading a picture by the portrait photographer. For example, an uploaded picture nearest to the current time may be automatically searched and taken as a background picture pushed to the portrait photographer, or background pictures uploaded during this time range every day may be selected in priority and may be correspondingly pushed at random.

The server may push the background picture strategy according to a position parameter (according to the strategy, position data obtained when the picture is photographed needs to be uploaded when the scenery photographer uploads the picture and the personal social information). For example, the priority strategy for pushing images may be formulated according to a distance relationship between the scenery photographer and the portrait photographer, or a scenery image of a region designated by the portrait photographer is used as the background picture to be pushed in high priority.

The matching degree between the user personal information may be used as the basis of the strategy for pushing a background picture, for example, gender, age, education background and so on.

Some strategies for pushing related to historical data may be adopted, for example, according to the quantity of pictures uploaded by the scenery photographer and the quantity of pictures adopted. Alternatively, the strategy for pushing a background picture may be formulated according to historical selection data features of the portrait photographer.

The above strategies may be individually used or mixedly used. Under the premise of successfully pushing the background picture to the portrait photographer, selection of related strategies is merely a difference in implementation.

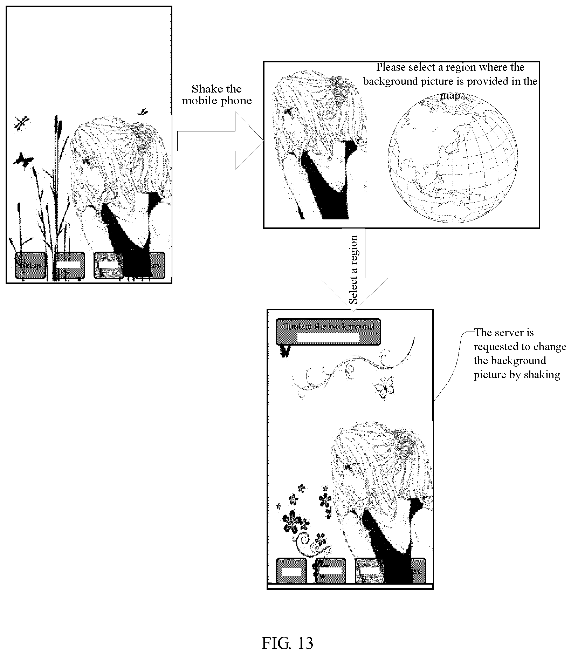

FIG. 13 is a schematic diagram of a related interaction at a terminal according to an embodiment of the present disclosure. In this schematic diagram, manually selecting a scenery position by the portrait photographer is used as a priority strategy for uploading a scenery picture. As shown in FIG. 13:
After photographing a picture, the portrait photographer starts a flow of requesting the background picture in the present disclosure by means of the operation of shaking. After the portrait photographer shakes a mobile phone, a camera interface displays the picture by means of right-left split screen mode. The left side displays a personal image in the picture extracted through a picture processing method, and the right side displays a map interface which can allow the portrait photographer to select a territory limited by the background image.

After the portrait photographer manually selects the limited territory from the region, the terminal sends the regional information selected by the user to the server, so that the server push the related background picture to the terminal of the portrait photographer according to the selected territory.

After the terminal of the portrait photographer receives the background picture, the background picture is synthesized with the personal image. At the moment, if the portrait photographer is unsatisfied with the received background picture, the portrait photographer may request the server to replace a new picture by shaking the mobile phone.

After the synthesis succeeds, the interface of the synthesis result provides an interface for contacting with the background picture provider. When the user starts the interface, a request for establishing an instant communication is sent to the server. After the server establishes the instant communication between the portrait photographer and the background picture provider, the two parties may further carry out instant communication.

According to the technical solution of the embodiment of the present disclosure, new background scenery pictures may be continuously downloaded from the server by way of shaking (or by other ways) by the portrait photographer, whereas the server may automatically select, according to time/region-related strategies, background pictures attracting the portrait photographer and send the pictures at random. In this way, the user may experience a novel manner for replacing background.

In the embodiment of the present disclosure, on the basis of synthesizing the photographed pictures, a social function between a scenery photographer and a portrait photographer is proposed. This function can allow the portrait photographer to conveniently come into contact with scenery photographers of scenery pictures popular with the portrait photographer, thereby implementing the effect of further achieving the network social function by matching and synthesizing pictures. Therefore, the present disclosure has good implementation value and use experience.

It is to be noted that the above modules may be implemented by means of software or hardware. The latter implementation means may be implemented in the following ways, but not limited thereto: all the above modules are positioned in the same processor; or the above modules are respectively positioned in a plurality of processors.

An embodiment of the present disclosure further provides a storage medium. Alternatively, in this embodiment, the foregoing storage medium may be configured to store program codes for performing following steps:
S1: extracting, by a terminal, a predetermined image displayed on a first picture in the terminal;
S2: acquiring, by the terminal, a second picture; and
S3: combining, by the terminal, the predetermined image and the second picture into one picture.

Alternatively, the storage medium is further configured to store program codes for performing following steps:
S 1: receiving, by a first server, a request message sent from a terminal, wherein the request message is used for acquiring a picture stored in the first server, and the picture stored in the first server is used for combining with a predetermined image displayed on a first picture in the terminal;
S2: selecting, by the first server, one or more pictures from stored pictures; and
S3: sending, by the first server, the selected pictures to the terminal.

Alternatively, in this embodiment, the forgoing storage medium may include but is not limited to: a USB flash disk, a read-only memory (Read-Only Memory, hereinafter referred to as ROM), a random access memory (Random Access Memory, hereinafter referred to as RAM), a mobile hard disk, a magnetic disk or an optical disk and other media capable of storing a program code.

Alternatively, reference may be made to examples as recited in the above embodiments and alternative embodiments for specific examples in this embodiment, which is not repeated any more herein.

Apparently, those skilled in the art should understand each of the foregoing modules or steps of the present disclosure may be realized with general computing devices, they may be concentrated on a single computing device, or distributed in a network constituted by a plurality of computing devices, optionally they may be realized with program codes executable by computing devices, thereby they may be stored in storage devices and executed by computing devices, and in some cases, the steps as shown or described may be performed in sequences different from the sequences herein, or they may be made into IC modules, or a plurality of modules or steps among them are made into a single IC module. In this way, the present disclosure is not limited to the combination of any specific hardware and software. The above are merely preferred embodiments of the present disclosure and are not intended to limit the present disclosure. To those skilled in the art, the present disclosure may have various modifications and changes. All modifications, equivalent substitutions and improvements made within the spirit and principle of the present disclosure shall fall within the protection scope of the present disclosure.

### INDUSTRIAL APPLICABILITY

As mentioned above, embodiments of the present disclosure provide a picture processing method, a sending method, a processing apparatus and a sending apparatus, which have following beneficial effects: solving the problem of impossibility in random replacement of a picture background in the related art, and thus reaching the effect of random replacement of a picture background.

## Claims

1. A picture processing method, comprising:
extracting, by a terminal, a predetermined image displayed on a first picture in the terminal;
acquiring, by the terminal, a second picture; and
combining, by the terminal, the predetermined image and the second picture into one picture.

2. The method according to claim 1, wherein the acquiring, by the terminal, the second picture comprises:
sending, by the terminal, a request message to a first server, wherein the request message is used for requesting to acquire a picture stored in the first server;
receiving, by the terminal, one or more pictures sent from the first server, wherein the one or more pictures are pictures selected by the first server according to a predetermined strategy; and
acquiring the second picture by the terminal from the one or more pictures.

3. The method according to claim 2, wherein after sending, by the terminal, the request message to the first server, the method further comprises:
receiving, by the terminal, information on a provider of the one or more pictures sent from the first server; and
communicating, by the terminal, with the provider of the one or more pictures according to the information on the provider of the one or more pictures.

4. The method according to claim 2, wherein sending, by the terminal, the request message to the first server comprises at least one of:
sending, by the terminal, the request message to the first server after determining that a velocity of movement and/or an acceleration exceeds a predetermined threshold; and
sending, by the terminal, the request message to the first server after receiving a touch signal satisfying a predetermined slide path.

5. The method according to claim 2, wherein the predetermined strategy comprises at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

6. The method according to claim 3, wherein the information on the provider of the one or more pictures comprises contact information on the provider of the one or more pictures, and the information on the provider of the one or more pictures comprises at least one of:
personal information on the provider of the one or more pictures, photographing time information on the one or more pictures, and photographing position information on the one or more pictures.

7. The method according to claim 3, wherein communicating, by the terminal, with the provider of the one or more pictures according to the information on the provider of the one or more pictures comprises:
displaying, by the terminal, an operation interface configured to establish a social connection;
sending, by the terminal, a communication request message, to a second server configured to establish a communication connection after receiving a signal for clicking the operation interface, wherein the communication request message is used for requesting to establish a communication connection between the terminal and the provider of the one or more pictures; and
communicating by the terminal with the provider of the one or more pictures upon establishing the communication connection.

8. The method according to claim 7, wherein sending, by the terminal, a communication request message, to a second server configured to establish a communication connection comprises:
sending, by the terminal via the first server, the communication request message, to the second server.

9. A picture sending method, comprising:
receiving, by a first server, a request message sent from a terminal, wherein the request message is used for acquiring a picture stored in the first server, and the picture stored in the first server is used for combining with a predetermined image displayed on a first picture in the terminal;
selecting, by the first server, one or more pictures from stored pictures; and
sending, by the first server, the selected pictures to the terminal.

10. The method according to claim 9, wherein selecting, by the first server, one or more pictures from stored pictures comprises:
selecting, by the first server, one or more pictures from the stored pictures according to the predetermined strategy, wherein the predetermined strategy comprises at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

11. The method according to claim 9, wherein after selecting, by the first server, one or more pictures from stored pictures, the method further comprises:
sending, by the first server, information on a provider of the selected one or more pictures to the terminal.

12. The method according to claim 11, wherein the information on the provider of the one or more pictures comprises contact information on the provider of the one or more pictures, wherein the information on the provider of the one or more pictures comprises at least one of:
personal information on the provider of the one or more pictures, photographing time information on the one or more pictures, and photographing position information on the one or more pictures.

13. The method according to claim 11, wherein after sending, by the first server, information on a provider of the selected one or more pictures to the terminal, the method further comprises:
receiving, by the first server, a communication request message sent from the terminal, wherein the communication request message is used for requesting to establish a communication connection between the terminal and a provider corresponding to the information on a provider of the one or more pictures; and
sending, by the first server, the communication request message to a second server configured to establish a communication connection.

14. A picture processing apparatus, used in a terminal, comprising:
an extracting module, configured to extract a predetermined image displayed on a first picture in the terminal;
an acquiring module, configured to acquire a second picture;
a combining module, configured to combine the predetermined image and the second picture into one picture.

15. The apparatus according to claim 14, wherein the acquiring module comprises:
a sending unit, configured to send a request message to a first server, wherein the request message is used for requesting to acquire a picture stored in the first server;
a first receiving unit, configured to receive one or more pictures sent from the first server, wherein the one or more pictures are pictures selected by the first server according to a predetermined strategy; and
an acquiring unit, configured to acquire the second picture from the one or more pictures.

16. The apparatus according to claim 15, further comprising:
a second receiving unit, configured to receive information on a provider of the one or more pictures sent from the first server; and
a communication unit, configured to communicate with the provider of the one or more pictures according to the information on the provider of the one or more pictures.

17. The apparatus according to claim 15, wherein the sending unit is configured to perform at least one of:
sending the request message to the first server after determining that a velocity of movement and/or an acceleration of the terminal exceeds a predetermined threshold; and
sending the request message to the first server after receiving a touch signal satisfying a predetermined slide path.

18. The apparatus according to claim 15, wherein the predetermined strategy comprises at least one of: time information of sending the request message by the terminal, position information of the terminal, user personal information recorded in the terminal, regional information selected by the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

19. The apparatus according to claim 16, wherein the information on the provider of the one or more pictures comprises contact information on the provider of the one or more pictures, and the information on the provider of the one or more pictures comprises at least one of:
personal information on the provider of the one or more pictures, photographing time information on the one or more pictures, and photographing position information on the one or more pictures.

20. The apparatus according to claim 16, wherein the communication unit comprises:
a display subunit, configured to display an operation interface for establishing a social connection;
a sending subunit, configured to send a communication request message to a second server for establishing a communication connection after receiving a signal for clicking the operation interface, wherein the communication request message is used for requesting to establish a communication connection between the communication unit and the provider of the one or more pictures; and
a communication subunit, configured to communicate with the provider of the one or more pictures upon establishing the communication connection.

21. The apparatus according to claim 20, wherein the sending subunit is configured to:
send the communication request message to the second server via the first server.

22. A picture sending apparatus, used in a first server, comprising:
a first receiving module, configured to receive a request message sent from a terminal, wherein the request message is used for acquiring a picture stored in the first server, and the picture stored in the first server is used for combining with a predetermined image displayed on a first picture in the terminal;
a selecting module, configured to select one or more pictures from stored pictures; and
a first sending module, configured to send the selected pictures to the terminal.

23. The apparatus according to claim 22, wherein the selecting module is configured to:
select one or more pictures from the stored pictures according to the predetermined strategy, wherein the predetermined strategy comprises at least one of: time information of sending the request message by the terminal, position information of the terminal, user personal information recorded in the terminal, photographing time information of a picture stored in the first server, photographing position information of a picture stored in the first server, personal information of a provider of a picture stored in the first server, information on quantity of pictures uploaded by the provider of a picture stored in the first server, information on quantity of pictures uploaded and adopted by the provider of a picture stored in the first server, and preference information of a picture stored in the first server.

24. The apparatus according to claim 22, further comprising:
a second sending module, configured to send information on a provider of the selected one or more pictures to the terminal.

25. The apparatus according to claim 24, wherein the information on the provider of the one or more pictures comprises contact information on the provider of the one or more pictures, wherein the information on the provider of the one or more pictures comprises at least one of:
personal information on the provider of the one or more pictures, photographing time information on the one or more pictures, and photographing position information on the one or more pictures.

26. The apparatus according to claim 24, further comprising:
a second receiving module, configured to receive a communication request message sent from the terminal, wherein the communication request message is used for requesting to establish a communication connection between the terminal and a provider corresponding to the information on a provider of the one or more pictures; and
a third sending module, configured to send the communication request message to a second server for establishing a communication connection.
